# FASCICULE DE BREVET EUROPEEN

(11) **EP 1 412 994 B1**
(45) Date de publication et mention de la délivrance du brevet: **13.03.2013**
(21) Numéro de dépôt: 02755435.1
(22) Date de dépôt: 05.08.2002
(51) Int. Cl.: H01M 4/62, H01M 4/24, H01M 10/26, H01M 10/24

(54) **GENERATEURS ELECTROCHIMIQUES SECONDAIRES ALCALINS A ANODE DE ZINC**
ALKALISCHE ELEKTROCHEMISCHE AUFLADBARE STROMGENERATOREN MIT ZINKANODE
SECONDARY ALKALINE ELECTROCHEMICAL GENERATORS WITH A ZINC ANODE

(30) Priorité: 03.08.2001 FR 0110488; 05.04.2002 FR 0204379
(43) Date de publication de la demande: 28.04.2004
(73) Titulaire: S.C.P.S. Société de Conseil et de Prospective Scientifique S.A., 93115 Rosny-Sous-Bois (FR)
(72) Inventeur: BUGNET, Bernard, F-94420 Le Plessis Trevise (FR); DONIAT, Denis, F-75116 Paris (FR); ROUGET, Robert, F-75016 Paris (FR)
(74) Mandataire: Stona, Daniel
(86) Numéro de dépôt international: PCT/IB2002/003155
(87) Numéro de publication internationale: WO 2003/015197

(56) Documents cités:
- WO-A-00/79622
- DE-A- 19 546 333
- FR-A- 2 788 887
- US-A- 2 994 625
- US-A- 3 476 601
- US-A- 4 041 221
- US-A- 4 332 871
- DATABASE CA [en ligne] CHEMICAL ABSTRACTS SERVICE, COLUMBUS, OHIO, US; ANON.: "Paste for manufacturing zinc electrodes" retrieved from STN Database accession no. 91:178073 XP002198392 & RES. DISCL. (1979), 184, 411-12,
- BASS K ET AL: "METHODS FOR THE REDUCTION OF SHAPE CHANGE AND DENDRITIC GROWTH IN ZINC-BASED SECONDARY CELLS" JOURNAL OF POWER SOURCES, ELSEVIER SEQUOIA S.A. LAUSANNE, CH, vol. 35, no. 3, 1 août 1991 (1991-08-01), pages 333-351, XP000231315 ISSN: 0378-7753
- MCLARNON F R ET AL: "THE SECONDARY ALKALINE ZINC ELECTRODE" JOURNAL OF THE ELECTROCHEMICAL SOCIETY, ELECTROCHEMICAL SOCIETY. MANCHESTER, NEW HAMPSHIRE, US, vol. 138, no. 2, 1 février 1991 (1991-02-01), pages 645-664, XP000278364 ISSN: 0013-4651
- PATENT ABSTRACTS OF JAPAN vol. 2000, no. 08, 6 octobre 2000 (2000-10-06) & JP 2000 133302 A (SANYO ELECTRIC CO LTD), 12 mai 2000 (2000-05-12)
- PATENT ABSTRACTS OF JAPAN vol. 1995, no. 01, 28 février 1995 (1995-02-28) & JP 06 283194 A (YUASA CORP), 7 octobre 1994 (1994-10-07)

## Description

La présente invention concerne des générateurs électrochimiques secondaires alcalins à anode de zinc, la masse active de l'anode comprenant au moins une céramique conductrice. Selon l'invention, l'électrolyte du générateur est constitué d'une solution alcaline fortement concentrée et/ou la masse active de l'anode de zinc contient un additif constitué d'au moins un titanate alcalin ou alcalino-terreux. L'invention concerne également l'anode du zinc des générateurs selon l'invention ainsi que son procédé de fabrication.

La présente invention concerne le domaine des générateurs électrochimiques, et plus particulièrement celui des accumulateurs.

Elle est spécialement relative aux générateurs secondaires à anode de zinc et est destinée à obtenir un haut niveau de cyclabilité de l'électrode de zinc.

L'électrode de zinc est bien connue de l'homme de l'art pour ses performances élevées. Elle peut par ailleurs être mise en oeuvre dans divers systèmes électrochimiques secondaires : générateurs alcalins air-zinc, nickel-zinc, et argent-zinc, générateurs à électrolytes salins brome-zinc et chlore-zinc.

Le zinc constitue un matériau actif anodique attractif, présentant un potentiel redox fortement négatif de -1,25 V/NHE (Electrode à Hydrogène Normal) pour le couple Zn/Zn(OH)₂). L'électrode de zinc offre une capacité massique théorique de 820 Ah/kg. Elle permet ainsi par exemple d'obtenir des énergies massiques théoriques de 334 Wh/kg pour le couple nickel-zinc (NiZn), et de 1.320 Wh/kg pour le couple zinc-oxygène. Pour l'accumulateur NiZn, l'énergie massique pratique se situe habituellement entre environ 50 et 80 Wh/kg, la tension étant par ailleurs de 1,65 Volt, au lieu de 1,2 Volt pour les autres systèmes alcalins.

On peut également souligner, au titre des avantages du zinc, d'une part son caractère de non-toxicité pour l'environnement (production, utilisation, déchets), d'autre part son faible coût, très inférieur à ceux des autres matériaux anodiques d'accumulateurs alcalins (cadmium et hydrures métalliques) ou des accumulateurs au lithium.

Pourtant, le développement industriel de systèmes rechargeables utilisant l'électrode de zinc s'est heurté à une difficulté majeure, celle de son insuffisance de durée de vie en cyclage.

Les réactions qui interviennent au niveau de l'anode sont les suivantes en accumulateur alcalin :

<= charge

Zn + 20H⁻ ⇔ ZnO + H₂O + 2e⁻ avec ZnO + H₂O + 2OH⁻ ⇔ [Zn(OH)₄]²⁻

décharge =>

C'est en fait d'une manière générale à la formation de dépôts de structure modifiée par rapport à leur forme d'origine, et souvent dendritiques, spongieux ou pulvérulents, que conduit la recharge de l'électrode de zinc à partir de ses oxydes et hydroxydes et des zincates. Ce phénomène intervient de surcroît dans un très large domaine de densités de courant.

Les dépôts de type dendritique conduisent rapidement à des poussées de zinc à travers les séparateurs et à la mise en court-circuit avec les électrodes de polarité opposée.

Quant aux dépôts de type pulvérulent ou spongieux, ils ne permettent pas la reconstitution d'électrodes aptes à un fonctionnement satisfaisant et durable, puisque l'adhérence de la matière active est insuffisante.

Plus encore, la réduction des oxydes, hydroxydes et zincates en zinc au niveau de l'anode, lors des phases de recharges, se caractérise également par des changements de morphologie de l'électrode elle-même. On observe, selon les modes de fonctionnement des accumulateurs, différents types de modifications de forme de l'anode, de par un phénomène de redistribution non uniforme du zinc au cours de sa formation. Cela peut notamment se traduire par une densification nuisible de la masse active anodique en surface de l'électrode, le plus souvent au niveau de sa zone centrale. Dans le même temps, on assiste en général à une diminution de la porosité de l'électrode, ce qui contribue à accélérer la formation préférentielle du zinc à sa surface.

Ces handicaps importants, réduisant le nombre de cycles réalisables à quelques dizaines seulement - niveau insuffisant pour conférer un intérêt économique à un système secondaire - ont conduit à la réalisation de très nombreux travaux ayant pour objectif d'améliorer les caractéristiques de dépôt du zinc en recharge, en vue d'accroître le nombre de cycles de charges - décharges que pourrait accepter le générateur.

Des voies très diverses ont été explorées afin de tenter de minimiser ou de retarder le plus longtemps possible ces défauts de formation du zinc. Parmi celles-ci, on peut en particulier signaler les suivantes :
- des méthodes "mécaniques", visant à réduire la formation ou la poussée dendritique ou à éviter les dépôts pulvérulents : circulation de l'électrolyte et / ou de l'électrode de zinc sous forme dispersée; vibrations imposées aux électrodes; utilisation de séparateurs résistants à la perforation par les dendrites, souvent en couches multiples, et même de membranes échangeuses d'ions, pour prévenir la migration des zincates;
- des méthodes "électriques", destinées à améliorer les conditions de formation du dépôt de zinc : contrôle des paramètres de charge (intensité, tension, ...); emploi de courants pulsés, y compris avec inversions de courant pour tenter de dissoudre les dendrites en formation;
- des méthodes "chimiques" et "électrochimiques" : mise en oeuvre d'additifs, incorporés à l'électrolyte (fluorure, carbonate, ...) et/ou à la matière active anodique (calcium, baryum, ...), et dilution de l'électrolyte afin notamment de limiter la solubilité des zincates et de former de l'oxyde de zinc et des composés insolubles du zinc.

Ces diverses techniques peuvent être mises en oeuvre isolément ou en combinaisons.

Leurs effets positifs sont en tout état de cause limités et se sont avérés insuffisants pour conférer aux générateurs secondaires à anode de zinc, et en particulier au couple NiZn pourtant théoriquement très attrayant, une quelconque viabilité économique : ils ne permettent guère d'atteindre ou de dépasser sensiblement une centaine de cycles effectués avec des niveaux de profondeur de décharge qui soient significatifs.

Ces techniques présentent par ailleurs, pour certaines, des effets négatifs pénalisants, tels que :
- augmentation de la résistance interne de l'accumulateur (due à certains additifs ou à la dilution de l'électrolyte),
- dégradation de la durée de vie de la cathode de nickel (par emploi de certains additifs),
- complexité mécanique de fonctionnement (pour les systèmes à circulation),
- augmentations de volume et de masse du système (dégradation des performances techniques spécifiques, en termes d'énergies massique et volumique),
- accroissement du coût (perte de l'avantage économique potentiel).

Une innovation importante a été apportée et décrite par l'exposé d'invention de la demande de brevet français FR 2.788.887, la technologie élaborée pouvant autoriser la réalisation de plusieurs centaines de cycles dans une large gamme de régimes de fonctionnement et jusqu'à des profondeurs de décharge très élevées, grâce à la mise en oeuvre de moyens destinés à accroître le rendement d'utilisation de la matière active, par amélioration de la percolation des charges en son sein.

Cette invention repose sur l'observation qu'un drainage insuffisant des charges au sein de la matière active conduit à favoriser la formation du dépôt de zinc, lors des recharges, en des sites ne représentant qu'un pourcentage limité de l'ensemble de la masse active. C'est donc alors à partir de sites d'une surface totale limitée par rapport à la surface développée globale de la matière anodique, que s'effectue cette croissance du zinc, phénomène se traduisant le plus souvent par un caractère dendritique du dépôt, ou par la densification de celui-ci. La technologie décrite dans le document sus-mentionné montre que ce mécanisme peut être fortement réduit lorsque l'on parvient à réaliser le dépôt de la même quantité totale de zinc sur une surface beaucoup plus importante, en multipliant les sites de formation du dépôt, dans tout le volume de l'électrode.

Cette technologie, selon une mise en oeuvre préférentielle, se traduit par l'utilisation, au sein de l'anode de zinc, d'un double ou triple niveau de collecte électrique :
- un réseau collecteur principal : un support d'électrode de type "mousse métallique" (structure alvéolaire réticulée),
- un réseau conducteur secondaire : une dispersion de particules céramiques conductrices chimiquement inertes dans l'accumulateur,
- un possible réseau conducteur tertiaire complémentaire : une dispersion de bismuth dans la masse active anodique.

Une "masse antipolaire", pouvant être constituée d'hydroxyde de nickel dans le cas de réalisation d'accumulateurs nickel-zinc, peut également être introduite dans l'anode de zinc, et contribue de manière originale au niveau de performances obtenu.

La présente invention vise à augmenter la cyclabilité des générateurs électrochimiques secondaires alcalins à anode de zinc en améliorant la qualité du dépôt de zinc obtenu lors de la recharge. Ce problème est résolu en combinant l'utilisation de céramiques conductrices utilisées comme agent de conduction électrique au sein de la masse active anodique, et l'emploi d'un additif tel que décrit ci-dessous et/ou d'un électrolyte alcalin de concentration appropriée pouvant contenir de l'oxyde de zinc solubilisé.

Dans le "Journal of the Electrochemical Society", Vol. 145 n°4, avril 1988, page 1211, C.F. Windisch et al. décrit l'évolution de la surface de disques polis de nitrure de titane, immergés Durant 136 jours dans une solution de potasse concentrée. Les auteurs constatent que, au cours d'expérience de polarisation anodique, le nitrure de titane se transforme en titanates au cours d'une réaction d'oxydation avec dégagement d'O₂. Néanmoins, les valeurs de polarisation utilisées sont très élevées et s'appliquent à des supercondensateurs dans lesquels la transformation accélérée du nitrure de titane en titanate est due à un phénomène électrochimique qui n'apparaît pas à des valeurs de potentiels telles que celles utilisées dans la présente invention.

Néanmoins, Il est également apparu que diverses céramiques conductrices, et en particulier le nitrure de titane, pouvaient évoluer, par réaction chimique, après un séjour prolongé de plusieurs dizaines de jours dans les solutions alcalines concentrées.

Ce phénomène se traduit alors, dans le cas du nitrure de titane (TiN) en particulier, par la formation de titanate de potassium (en solution de potasse), ou de titanate de sodium (en solution de soude), qui se présente sous une forme hydratée et faiblement cristallisée à la surface du nitrure de titane. On conçoit que cette corrosion soit amplifiée dans le cas de poudres, qui vont présenter des surfaces spécifiques plus importantes que celle d'une plaque polie. On conçoit également que cette corrosion pourrait être amplifiée en présence de solutions alcalines fortement concentrées.

Il est par ailleurs connu que les titanates hydratés (de même que les oxydes de titane hydratés), présentent une capacité de fixation des ions métalliques, laquelle varie selon la structure du titanate et la nature de l'ion fixé. Cette capacité de fixation, par échange d'ions, est en particulier utilisée pour le traitement d'effluents radioactifs, y compris en milieu alcalin.

L'amélioration de l'aptitude au cyclage des électrodes de zinc incorporant des céramiques conductrices selon la description faite dans le document FR 2.788.887 peut donc résulter non seulement d'une multiplication des sites conducteurs de germination du zinc, mais également d'une rétention des ions zincates laquelle est susceptible de s'effectuer à la surface des particules conductrices de céramique.

Cependant, l'emploi d'un électrolyte constitué d'une solution alcaline fortement concentrée favorisant la formation de sites de rétention des ions zincates, va à l'encontre de ce qui est recommandé dans la littérature relative aux accumulateurs NiZn.

Ainsi, E.G. Gagnon (Journal of the Electrochemical Society (1986), vol. 133, n° 10, p. 1989-1995) a ainsi montré que des électrodes de zinc, dont la masse active est constituée d'un mélange où le ratio molaire entre hydroxyde de calcium et oxyde de zinc est compris entre 0,75 et 1, présentent une meilleure cyclabilité, évaluées par rapport aux croissances dendritiques et au changement de forme, lorsque la concentration de l'électrolyte est de 20 % en poids d'hydroxyde de potassium (4,2 M). Pour des solutions 9M, l'auteur observe des redistributions importantes du zinc, ainsi que des croissances dendritiques en grande quantité conduisant à un arrêt rapide du cyclage.

De même, T.C. Adler, FR. McLarnon et E.J. Cairns (Journal of the Electrochemical Society (1993), vol. 140 n° 2, p. 289-294), montrent qu'un électrolyte constitué de potasse 6,8M ne permet pas de dépasser 100 cycles pour un accumulateur NiZn, et préconisent l'utilisation d'un électrolyte dilué compose de potasse 3,2M, de fluorure de potassium 1,8M et de carbonate de potassium 1,8M.

A l'inverse, il est recommandé d'utiliser dans les accumulateurs argent-zinc utilisant des membranes cellulosiques (cellophane) comme séparateur, des solutions très concentrées en hydroxyde de potassium, de 35 à 45 %, soit des concentrations comprises entre 8,3 et 11,5M. En effet, les séparateurs cellulosiques s'hydrolysent en milieu alcalin, et la réduction de la quantité d'eau dans l'électrolyte permet de ralentir ce phénomène. Cette concentration élevée constitue une contrainte spécifique à ce type d'accumulateurs AgZn, et limite traditionnellement leur cyclabilité du fait des modifications de l'électrode de zinc au cours des cycles, comme décrit précédemment, et conduit à des durées de vie n'excédant pas 100 cycles.

Les auteurs de la présente demande de brevet ont en conséquence entrepris une étude systématique destinée à définir les conditions et moyens aptes à favoriser l'augmentation de la rétention des zincates au sein de l'anode de zinc dans un générateur électrochimique secondaire alcalin, à proximité des sites conducteurs, qui a aboutit à l'emploi d'additifs spécifiques, combinés ou non à l'utilisation d'électrolytes constitués de solutions alcalines fortement concentrées. Les auteurs de la présente invention ont également découvert que l'utilisation conjointe d'un électrolyte constitué d'une solution alcaline fortement concentrée avec des anodes de zinc comprenant des céramiques conductrices, permettait d'augmenter l'aptitude au cyclage de l'électrode. Ce sont là les objets de l'invention.

Par conséquent, la présente invention concerne des générateurs électrochimiques secondaires alcalins à anode de zinc, la masse active de l'anode comprenant au moins une céramique conductrice et de l'oxyde de zinc, l'électrolyte du générateur étant constitué d'une solution alcaline ayant une concentration en base comprise entre 7 et 15 mol/l et la masse active de l'anode de zinc contenant un additif constitué d'au moins un titanate alcalin de formule générale (M₂O)ₙ(TiO₂)ₘxH₂O dans laquelle M désigne Li, Na, K, Rb ou Cs, n étant compris entre 0,5 et 2, m étant compris entre 1 et 10 et x étant compris entre 0 et 10, ou alcalino-terreux de formule générale (MO)ₙ(TiO₂)ₘxH₂O dans laquelle M désigne Mg, Ca, Sr ou Ba, n étant compris entre 1 et 5, m étant compris entre 1 et 10 et x étant compris entre 0 et 10, ces générateurs étant caractérisés en ce que l'électrolyte contient en outre au moins un composé à base d'aluminium soluble dans cet électrolyte et constitué, au moins en partie, de nitrures doubles de titane et d'aluminium, de nitrure d'aluminium ou d'aluminate de calcium, la quantité de ce composé à base d'aluminium étant comprise entre 1 et 5%, en poids par rapport à l'oxyde de zinc présent dans la masse active de l'anode de zinc.

Lors des phases de décharge de l'anode de zinc, le zinc métallique est oxydé en des formes insolubles et solubles : oxydes, hydroxydes et zincates. Ces derniers, solubles, diffusent dans l'ensemble du volume de l'électrolyte de l'accumulateur. C'est pour limiter ce phénomène que certains préconisent l'emploi d'additifs, tels que l'hydroxyde de calcium Ca(OH)₂, incorporés à la matière active anodique ou à l'électrolyte, destinés à limiter la solubilité des zincates. On conçoit en effet que, ceux-ci étant répartis dans tout l'électrolyte, leur réduction en zinc métallique lors de la recharge s'opère très largement à partir d'espèces qui ne se trouvent pas au sein de l'anode poreuse, mais à l'extérieur de celle-ci, et s'effectue donc par les surfaces de l'électrode de zinc. Le dépôt s'effectue alors préférentiellement sur ces surfaces, plutôt que dans tout le volume anodique, avec les risques de redistribution mentionnés plus haut. Si l'on est en mesure de retenir une part importante des espèces solubles de zinc au sein même de la masse anodique, dans son volume, le zinc qui en sera issu à la charge pourra beaucoup plus aisément se former dans toute l'épaisseur de l'électrode. C'est l'objectif que se sont assigné les auteurs de la présente invention, en combinant cette caractéristique avantageuse avec la présence, au sein de l'électrode, des réseaux conducteurs dispersés principalement constitués par la présence de céramiques conductrices selon la demande de brevet FR 2.788.887.

Au terme des travaux conduits, il est apparu que l'addition d'au moins un titanate alcalin de formule générale (M₂O)ₙ(TiO₂)ₘxH₂O dans laquelle M désigne Li, Na, K, Rb ou Cs, n est compris entre 0,5 et 2, m est compris entre 1 et 10 et x est compris entre 0 et 10, ou alcalino-terreux de formule générale (MO)ₙ(TiO₂)ₘxH₂O dans laquelle M désigne Mg, Ca, Sr ou Ba, n est compris entre 1 et 5, m est compris entre 1 et 10 et x est compris entre 0 et 10, à la masse active, améliore la cyclabilité de l'anode de zinc lorsqu'il est combiné aux céramiques conductrices et plus particulièrement au nitrure de titane.

Dans la présente demande, les différentes valeurs constituant les limites des plages de valeurs doivent être considérées comme étant comprises dans les plages de valeurs elles-mêmes. En outre, par anode de zinc, on entend une anode dont la masse active comprend une quantité minimum de zinc sous forme d'oxyde de zinc additionné ou non de zinc métallique.

Parmi les titanates les plus efficaces, il convient de signaler que l'action vis-à-vis des zincates est particulièrement marquée lorsque l'additif est, au moins en partie, constitué de titanate de calcium.

Selon la présente invention, il peut également être utile d'associer au mélange céramiques conductrices - titanates, et plus spécifiquement nitrure de titane - titanate de calcium, des composés à base d'aluminium tels que l'aluminate de calcium, et/ou d'ajouter un composé soluble de l'aluminium dans l'électrolyte, et/ou encore d'ajouter à la masse active anodique un composé qui, au contact de l'électrolyte alcalin, va former des composés solubles de l'aluminium. On peut citer, à titre d'exemple non limitatif, le nitrure d'aluminium, ou les nitrures doubles de titane et d'aluminium.

De même, il est possible d'ajouter à la masse active une quantité d'un additif constitué d'au moins un composé à base d'aluminium et/ou une quantité d'un additif constitué d'au moins un composé formant, au contact de l'électrolyte alcalin, des composés solubles de l'aluminium comprise 1 et 5 % en poids par rapport à l'oxyde de zinc.

Les nitrures doubles de titane et d'aluminium ont l'avantage de conduire à la formation de nitrure de titane à forte surface développée dont la réactivité vis-à-vis de l'électrolyte est augmentée, renforçant ainsi la capacité de fixation des zincates.

On parvient ainsi à constituer une liaison intime entre des sites de fixation des espèces solubles du zinc, et des sites conducteurs de germination du zinc lors de la recharge, au sein même de la masse active anodique de l'électrode poreuse de zinc.

Les phénomènes combinés de fixation des zincates et de germination du zinc sur des sites conducteurs multiples peuvent être de surcroît amplifiés par l'addition de bismuth à la masse active, (ou oxyde de bismuth qui sera transformé en bismuth métallique lors de la charge), qui va renforcer la conduction interne de l'électrode.

Par contre, les auteurs de la présente invention ont observé que les additifs comportant du silicium, tels que silicate de calcium, ou aluminosilicate de calcium par exemple, peuvent perturber fortement le fonctionnement de l'électrode et favoriser les croissances dendritiques de zinc. On soulignera que ces résultats sont en contradiction avec ceux de la littérature, à travers laquelle l'homme de l'art prône l'utilisation de silicate de calcium, soit comme absorbant (brevet US 4.312.931 notamment), soit comme constituant de ciment (brevet US 4.332.871).

De préférence, l'électrolyte selon l'invention contient de l'oxyde de zinc solubilisé sous forme d'ions zincates. En effet, la formation du zinc métallique est par ailleurs favorisée lors de la charge ou cycle de charge du générateur selon l'invention par la présence de l'ion zincate dans l'électrolyte.

L'amélioration de l'aptitude au cyclage des électrodes de zinc incorporant au moins une céramique conductrice selon les descriptions données dans la demande de brevet FR 2.788.887 et incorporées par référence dans la présente description, lorsqu'elles sont associées à un électrolyte constitué d'une solution alcaline fortement concentrée et contenant, de préférence de l'oxyde de zinc solubilisé sous forme d'ions zincates, résulte non seulement d'une multiplication des sites conducteurs de germination du zinc métallique dans la masse anodique mais également de la création rendue plus rapide de sites de rétention des zincates à la surface des particules conductrices de céramiques, dès la mise en contact de l'anode avec l'électrolyte, grâce à la concentration élevée de celui-ci en ions OH⁻.

Selon un mode de réalisation préféré, on entend par un électrolyte constitué d'une solution alcaline fortement concentrée, une solution de potasse ou de soude dont la concentration est comprise entre 7 et 15 moles par litre. De préférence, la concentration est comprise entre 9 et 14 moles par litre et plus préférentiellement entre 10 et 13 moles par litre. Dans la présente demande, les différentes valeurs constituant les limites des plages de valeurs doivent être considérées comme étant comprises dans les plages de valeurs elles-mêmes. En outre, par anode de zinc, on entend une anode dont la masse active comprend une quantité minimum de zinc sous forme d'oxyde de zinc additionné ou non de zinc métallique.

Ainsi, dans les générateurs selon l'invention, deux facteurs interviennent en synergie lorsque l'on met en oeuvre un électrolyte constitué d'une solution alcaline fortement concentrée contenant ou non de l'oxyde de zinc solubilisé, dans un système intégrant une anode de zinc chargée en céramique conductrice :
- la concentration en ions OH⁻
- la concentration en zincates.

Ces deux facteurs agissent de manières différentes :
- les ions OH⁻ créent sur les particules de céramique conductrice, par attaque chimique, des sites d'adsorption des zincates, à travers la formation de titanates faiblement cristallisés, la vitesse de corrosion de la céramique étant accélérée par l'augmentation de concentration en ions OH⁻ ;
- les zincates, dont la concentration est augmentée grâce à la solubilité accrue de l'oxyde de zinc, dans la potasse concentrée, vont accélérer et renforcer la formation d'un réseau conducteur de zinc dans l'anode, dès les premiers cycles de formation d'une électrode où l'oxyde de zinc est au contraire non conducteur.

L'utilisation d'un électrolyte constitué d'une solution alcaline fortement concentrée contenant, de préférence, de l'oxyde de zinc solubilisé, s'avère donc particulièrement avantageuse pour la réalisation d'accumulateurs à anode de zinc incorporant initialement des céramiques conductrices et, éventuellement des titanates tels que décrits ci-dessus. Elle est rendue possible grâce à la bonne rétention des zincates au sein de la masse anodique, sur les sites d'adsorption qui y sont constitués.

Cet avantage, et l'intérêt d'un électrolyte concentré, sont renforcés par le fait qu'il est souhaitable de réduire les masses des divers composants de l'accumulateur, y compris celle de l'électrolyte, si l'on veut en optimiser les énergies spécifiques. Or, l'électrolyte utilisé dans un accumulateur à anode de zinc subit des fluctuations de concentration en zincates au cours des cycles de charge - décharge, du fait de la formation de ces zincates lors de la décharge de l'accumulateur, et de leur transformation en zinc métallique au cours de la recharge.

On conçoit que, toutes choses égales par ailleurs, la seule réduction recherchée du volume d'électrolyte entraînerait une réduction proportionnelle de la quantité d'ions zincates qui peut y être contenue, et donc de la réserve utile en zinc métallique correspondante, à reformer au sein de l'anode durant la recharge et à disposition pour constituer le réseau conducteur de zinc mentionné plus haut. Un accroissement de la concentration de l'électrolyte permet, en revanche et avantageusement, pour un même volume, d'augmenter utilement la solubilité de l'oxyde de zinc, et donc la concentration en zincates.

Ainsi, s'il est possible d'accepter de larges excès d'électrolyte pour un accumulateur non optimisé de type ouvert, soit de 10 à 15 ml/Ah environ de capacité du générateur, cette quantité doit être réduite pour des accumulateurs semi-étanches ou étanches, et est alors généralement comprise entre 2 et 10 ml/Ah environ, et de préférence entre 2 et 5 ml/Ah. La réduction du volume d'électrolyte permet non seulement d'accroître les énergies massique et volumique, mais elle favorise également la recombinaison des gaz dans les accumulateurs semi-étanches et étanches.

En effet, l'oxygène formé sur l'électrode positive de nickel en fin de charge doit se recombiner avec le zinc métallique de l'anode, pour que soit limitée l'évolution de la pression interne. La diffusion de l'oxygène, selon des principes bien connus de l'homme de l'art pour les accumulateurs alcalins nickel-cadmium et nickel-métal hydrures, est facilitée lorsque la quantité d'électrolyte est réduite. Le même principe s'applique aux accumulateurs nickel-zinc à recombinaison partielle de gaz (semi-étanches) et à recombinaison de gaz (étanches).

Selon la présente invention, la réalisation des anodes de zinc se fera de préférence selon les procédés de fabrication décrits dans la demande de brevet FR 2 7887 887.

Un autre objet de l'invention concerne également l'anode de zinc et le procédé de fabrication de ladite anode de zinc pour générateurs électrochimiques secondaires alcalins. La masse active de l'anode de zinc comprenant de l'oxyde de zinc et au moins une céramique conductrice, on ajoute à la masse active de l'anode de zinc, une quantité d'un additif constitué d'au moins un titanate alcalin de formule générale (M₂O)ₙ(TiO₂)ₘxH₂O dans laquelle M désigne Li, Na, K, Rb ou Cs, n étant compris entre 0,5 et 2, m étant compris entre 1 et 10 et x étant compris entre 0 et 10, ou alcalino-terreux de formule générale (MO)ₙ(TiO₂)ₘxH₂O dans laquelle M désigne Mg, Ca, Sr ou Ba, n étant compris entre 1 et 5, m étant compris entre 1 et 10 et x étant compris entre 0 et 10, comprise entre 0.5 et 20 % en poids par rapport à l'oxyde de zinc.

L'anode de zinc mise en oeuvre peut avantageusement être du type électrode empâtée-plastifiée, et donc réalisée par empâtage, enduction, ou remplissage par tout moyen, en phase liquide ou sèche, d'un support tridimensionnel à haute porosité du type mousse métallique alvéolaire réticulée, avec une pâte contenant notamment de la poudre d'oxyde de zinc, la dispersion de particules de céramiques et des titanates tels que décrits ci-dessus, un agent plastifiant, et éventuellement un agent de mise en suspension

La dispersion des additifs aidant à l'adsorption du zinc au sein de la masse active anodique est un mode simple de réalisation de la combinaison dans le cadre de la présente invention. On utilise alors avantageusement des particules fines d'additifs, dispersées dans la masse active de la manière la plus homogène possible, pour une répartition régulière dans la masse, et donc pour un espacement toujours très réduit entre sites d'adsorption des zincates et sites de germination du zinc.

Dans le cadre de la présente invention, il peut être avantageux de mettre en oeuvre les moyens les plus diversifiés pour constituer des liaisons entre réseaux conducteurs au sein de l'électrode et additifs de rétention des zincates en solution.

Parmi ces moyens, on peut citer les suivants :
- fixation, par tout procédé, des particules d'additif de rétention selon l'invention, sur le support collecteur de charges, cette fixation pouvant s'effectuer sur un pourcentage plus ou moins important de la surface développée de celui-ci, et en particulier des mailles d'un support de type mousse métallique, ou tout autre structure métallique ou métallisée tridimensionnelle à haute porosité ;
- mélange intime préalable des particules de céramiques, des additifs de rétention des zincates, et éventuellement des particules de bismuth ou d'oxyde de bismuth ;
- fixation, par exemple par mécano-chimie ou par production conjointe - notamment par réaction thermique auto-propagée - de l'additif de rétention sur les particules mêmes de la céramique conductrice. Ainsi, notamment lorsque la céramique est préparée par réaction thermique auto-propagée, il est possible et avantageux d'incorporer dans le mélange réactionnel, les composants qui permettront la formation conjointe des additifs de rétention des ions zincates.

Ainsi, on peut utiliser un procédé de préparation des nitrures bien connu de l'homme du métier, la réaction thermique auto-propagée (SHS "Self Propagating High Temperature Synthesis"). Tel que cela est décrit, par exemple, dans le brevet US 4.459.363, ce procédé consiste à mélanger une source d'azote, en particulier un azoture métallique tel que l'azoture de sodium, avec au moins une quantité stoechiométrique d'un oxyde métallique tel que l'oxyde de titane. La réaction thermique auto-propagée est ensuite déclenchée. On peut avantageusement ajuster le mélange réactionnel, de façon à transformer une partie de l'oxyde de titane en titanates. On obtient ainsi des particules de granulométrie appropriée constituées de céramiques conductrices tel que le nitrure de titane auxquelles sont intimement liés des additifs de rétention des ions zincates, tels que les titanates alcalins. L'homme du métier pourra aisément envisager d'autres exemples de mélange réactionnel ou de mode de préparation comprenant par exemple un composé à base d'aluminium, et traiter le mélange par réaction thermique auto-propagée aboutissant à l'obtention de particules dont la composition et la structure seront parfaitement adaptées à la réalisation de la présente invention. Par conséquent, selon un mode de réalisation préférée, l'additif de rétention des zincates, tels que les titanates, sera fixé sur les particules de céramiques conductrices. Cette étape de fixation peut être réalisée lors de la fabrication conjointe de l'additif et de la ou des céramiques par une réaction thermique auto-propagée.

A titre d'illustration non limitative de la présente invention, on décrit ci-après deux exemples avantageux de réalisation, qui permettent de mesurer l'intérêt de ladite invention.

### Exemple 1

Trois catégories d'anodes de zinc, A1, A2, A3, toutes de type empâté - plastifié, sont réalisées. Les masses actives sont préparées sous la forme de pâtes de compositions suivantes :

| | Anodes A1 | Anodes A2 | Anodes A3 |
|---|---|---|---|
| Matière active | Poudre ZnO | Poudre ZnO | Poudre ZnO |
| Zinc métallique | 5%⁽¹⁾ | 5%⁽¹⁾ | 5%⁽¹⁾ |
| Nitrure de titane⁽²⁾ | 18%⁽³⁾ | 15%⁽³⁾ | 10 %⁽³⁾ |
| Titanate de calcium | - | 2,5 %⁽³⁾ | 1,25 % |
| Aluminate de calcium | - | 2%⁽³⁾ | 3%⁽³⁾ |
| Oxyde de bismuth | 5%⁽¹⁾ | 5 %⁽¹⁾ | 5%⁽¹⁾ |
| Hydroxyde de nickel | 5%⁽¹⁾ | 5 %⁽¹⁾ | 5%⁽¹⁾ |
| Agent plastifiant | P.T.F.E.⁽⁴⁾ | P.T.F.E.⁽⁴⁾ | P.T.F.E.⁽⁴⁾ |
| Agent de mise en suspension | eau | eau | eau |
| Support : mousse réticulée ⁽⁵⁾ (épaisseur initiale 2 mm) | Cu + Pb, 45 PPI 550 g/m² | Cu + Pb, 45 PPI 550 g/m² | Cu, 45 PPI 400 g/m² |

| | | | |
|---|---|---|---|
| ⁽¹⁾: en poids par rapport à l'oxyde de zinc ⁽²⁾: granulométrie moyenne de 3 µm ⁽³⁾: en poids par rapport à la masse active ⁽⁴⁾: introduit sous la forme d'une suspension aqueuse à 60 %, la concentration en PTFE s'établissant à 4 % en poids par rapport à l'oxyde de zinc ⁽⁵⁾: le grade "45 PPI" correspond à environ 18 pores en surface par centimètre linéaire. | | | |

Les supports - collecteurs des électrodes A1 et A2 sont en cuivre revêtu d'une couche protectrice de plomb, les supports d'électrodes A3 sont en cuivre non revêtu de cette couche protectrice.

Les particules solides ont fait l'objet d'un malaxage poussé avant adjonction d'eau, afin d'obtenir leur mélange intime et homogène.

Une fois introduite au sein du support métallique, la masse active est séchée, et l'électrode ainsi constituée est compactée, sous une pression de compactage de 80 kg par centimètre carré. L'épaisseur de l'électrode est ramenée à 0,8 millimètre. Les électrodes ont une capacité nominale unitaire de 1 Ah.

L'électrolyte est de la potasse, KOH, d'une concentration égale à 7 N. il est saturé en zincates, sans additifs.

On réalise des montages en accumulateurs nickel-zinc ouverts, en associant deux cathodes de nickel à une anode de zinc, afin que seule cette dernière définisse la capacité de l'accumulateur, et que ses caractéristiques propres puissent être suivies lors des tests.

On emploie une combinaison de deux séparateurs entre les électrodes de polarités opposées. L'un est une membrane microporeuse, telle que celle proposée sous la marque commerciale "Celgard" par la société Hoescht Celanese. L'autre est un séparateur non tissé en polyamide ou polypropylène, tel que le produit de référence "FS 2115" de la société Carl Freudenberg.

Les accumulateurs ainsi réalisés sont soumis à des essais de cyclage de longue durée, selon des procédures standardisées. Le type de cycles de charge-décharge, à courant imposé, est le suivant : régime de C/4 (charge ainsi que décharge effectuées chacune en 4 heures, le courant appliqué correspondant au quart de la capacité nominale de l'élément), avec une profondeur de décharge de 80 % environ ; un cycle comportant une décharge totale (100 % de profondeur) est réalisé tous les dix cycles.

Les électrodes de type A1 conservent plus de 80 % de leur capacité nominale durant 300 à 500 cycles selon les exemplaires avant de chuter très rapidement en capacité.

Les électrodes des types A2 et A3 ont conservé plus de 80 % de leur capacité nominale durant près de 1.500 cycles, et ont passé les 2.000 cycles avec une capacité supérieure à 70 % de la capacité nominale.

### Exemple 2

On réalise des accumulateurs nickel-zinc comportant des anodes de zinc de type A2 tels que décrits ci-dessus dans l'exemple 1, mais sans ajout de zinc métallique.

Trois séries d'accumulateurs nickel-zinc sont fabriquées, en assemblant pour chacun sept électrodes de nickel et huit électrodes de zinc. Les électrodes de nickel ont une capacité inférieure à celles des électrodes de zinc, et définissent la capacité de l'accumulateur qui est de 30 Ah.

On emploie une combinaison de deux séparateurs entre les électrodes de polarités opposées. L'un est une membrane microporeuse, telle que celle proposée sous la marque commerciale "Celgard" par la société Hoescht Celanese. L'autre est un séparateur non tissé en polyamide ou polypropylène, tel que le produit de référence "FS 2115" de la société Carl Freudenberg.

Les couvercles des accumulateurs sont munis d'une soupape s'ouvrant à faible pression, soit environ 0,2 bar.

Contrairement à l'exemple 1, on utilise deux électrolytes de concentrations différentes :
- une potasse 7 N, saturée en oxyde de zinc (électrolyte A),
- une potasse 12 N, saturée en oxyde de zinc (électrolyte B).

La première série d'accumulateurs est remplie d'électrolyte de type A, à raison de 300 ml par cellule. La seconde série est également remplie d'électrolyte de type A, mais à raison de 150 ml par cellule. La troisième série enfin, est remplie d'électrolyte de type B, à raison de 150 ml par cellule.

Les accumulateurs ainsi réalisés sont soumis à des essais de cyclage de longue durée, selon des procédures standardisées. Le type de cycles de charge-décharge, à courant imposé, est le suivant : régime de C/4 (charge ainsi que décharge effectuées chacune en 4 heures, le courant appliqué correspondant au quart de la capacité nominale de l'élément), avec une profondeur de décharge de 80 % environ ; un cycle comportant une décharge totale (100 % de profondeur) est réalisé tous les 50 cycles.

La première série d'accumulateurs conserve plus de 80 % de la capacité initiale durant près de 800 cycles.

La seconde série d'accumulateurs conserve plus de 80 % de la capacité initiale durant près de 400 cycles, avant de chuter rapidement en capacité.

La troisième série d'accumulateurs conserve plus de 80 % de la capacité initiale durant près de 1200 cycles.

La première série d'accumulateurs offre une durée de cyclage acceptable, mais présente un excès de poids de 25 % par rapport aux accumulateurs des deuxième et troisième séries.

L'effet de la diminution du volume d'électrolyte est particulièrement sensible sur la cyclabilité des accumulateurs de la seconde série.

Les accumulateurs de la troisième série, contenant un électrolyte fortement concentré, bien qu'en quantité réduite, présentent les meilleures caractéristiques en termes de cyclabilité et d'énergie massique.

Il a été montré dans le cadre de la présente invention, que les très hauts niveaux de performances atteints grâce à celle-ci, pouvaient l'être à travers l'adjonction de quantités de titanates tels que définis, comprises entre 0,5 et 20 % en poids par rapport à l'oxyde de zinc, et, de préférence, 1 à 5 % en poids par rapport à l'oxyde de zinc. Avantageusement, la quantité de composés à base de l'aluminium soluble dans l'électrolyte et/ou de composés formant, au contact de l'électrolyte alcalin, des composés solubles de l'aluminium est comprise entre 1 et 5 % en poids par rapport à l'oxyde de zinc.

Il a également été montré, sans sortir du cadre de l'invention, que les additifs de rétention des zincates, peuvent être constitués par une combinaison d'au moins deux des composés de types aluminates, titanates et alumino-titanates de baryum, calcium, lithium, magnésium, potassium, sodium, ou strontium.

On a enfin, comme il ressort d'une des mises en oeuvre décrites en exemple, vérifié dans le cadre de l'invention qu'il était parfaitement possible d'utiliser un support - collecteur de charges, notamment de type mousse alvéolaire réticulée, réalisé en cuivre, sans qu'il soit nécessairement besoin de revêtir celui-ci d'une couche protectrice d'un métal ou alliage à forte surtension d'hydrogène, destinée à éviter une corrosion dudit support.

Il a été également montré dans le cadre de la présente invention que les très hauts niveaux de performances atteints l'étaient grâce à l'emploi de solution alcaline fortement concentrée, en association avec des électrodes de zinc contenant des céramiques conductrices, telles que décrites dans le brevet FR 2.788.887 et des additifs appropriés tels que décrits dans la présente invention.

L'utilisation de potasse fortement concentrée contenant ou non de l'oxyde de zinc solubilisé permet en particulier de réaliser des accumulateurs à anode de zinc offrant des énergies massiques non dégradées, tout en satisfaisant aux critères de cyclabilité compatibles avec une application commerciale.

Sans sortir du cadre de la présente invention, il est possible de la mettre en oeuvre en lui associant tout ou partie des additifs ou procédures de charges décrits dans la littérature et appliqués à l'utilisation d'électrodes de zinc.

Naturellement, et comme il résulte d'ailleurs largement de ce qui précède, l'invention n'est pas limitée aux modes de réalisation particuliers qui ont été décrits à titre d'exemples. L'invention ne se limite pas aux exemples qui en ont été donnés, mais en embrasse toutes les variantes.

## Revendications

1. Générateurs électrochimiques secondaires alcalins à anode de zinc, la masse active de l'anode comprenant au moins une céramique conductrice et de l'oxyde de zinc, l'électrolyte du générateur étant constitué d'une solution alcaline ayant une concentration en base comprise entre 7 et 15 mol/l et la masse active de l'anode de zinc contenant un additif constitué d'au moins un titanate alcalin de formule générale (M₂O)ₙ(TiO₂)ₘxH₂O dans laquelle M désigne Li, Na, K, Rb ou Cs, n étant compris entre 0,5 et 2, m étant compris entre 1 et 10 et x étant compris entre 0 et 10, ou alcalino-terreux de formule générale (MO)ₙ(TiO₂)ₘxH₂O dans laquelle M désigne Mg, Ca, Sr ou Ba, n étant compris entre 1 et 5, m étant compris entre 1 et 10 et x étant compris entre 0 et 10, ces générateurs étant **caractérisés en ce que** l'électrolyte contient en outre au moins un composé à base d'aluminium soluble dans cet électrolyte et constitué, au moins en partie, de nitrures doubles de titane et d'aluminium, de nitrure d'aluminium ou d'aluminate de calcium, la quantité de ce composé à base d'aluminium étant comprise entre 1 et 5%, en poids par rapport à l'oxyde de zinc présent dans la masse active de l'anode de zinc.

2. Générateurs électrochimiques secondaires alcalins à anode selon la revendication 1, **caractérisés en ce que** la solution alcaline est une solution de potasse ou de soude.

3. Générateurs électrochimiques secondaires alcalins à anode de zinc selon l'une des revendications 1 à 2, **caractérisés en ce que** l'anode est une électrode de zinc empâtée-plastifiée utilisant un support et collecteur de charges de type mousse métallique réticulée.

4. Générateurs électrochimiques secondaires alcalins à anode de zinc selon l'une des revendications 1 à 3, **caractérisés en ce que** l'additif est, au moins en partie, constitué de titanate de calcium.

5. Générateurs électrochimiques secondaires alcalins à anode de zinc selon l'une des revendications 1 à 4, **caractérisés en ce que** l'électrolyte contient de l'oxyde de zinc solubilisé.

6. Générateurs électrochimiques secondaires alcalins à anode de zinc selon la revendication 5 ou 6, **caractérisés en ce que** la quantité d'additif est comprise entre 0.5 et 20 % en poids par rapport à l'oxyde de zinc.

7. Générateurs électrochimiques secondaires alcalins à anode de zinc selon l'une des revendications 1 à 6, **caractérisés en ce que** l'additif est sous forme de fines particules dispersées dans la masse active.

8. Générateurs électrochimiques secondaires alcalins à anode de zinc selon l'une des revendication 1 à 7, **caractérisés en ce que** l'additif est fixé sur les particules de ladite céramique conductrice.

9. Générateurs électrochimiques secondaires alcalins à anode de zinc selon l'une des revendications précédentes, caractérisés en ce la masse active de l'anode de zinc contient du bismuth ou de l'oxyde de bismuth.

## Claims

1. Alkaline secondary electrochemical generators with zinc anode, the active mass of the anode comprising at least one conducting ceramic material and zinc oxide, the electrolyte of the generator consisting of an alkaline solution having a base concentration between 7 and 15 mol/l and the active mass of the zinc anode containing an additive consisting of at least one alkali metal titanate of the general formula (M₂O)ₙ(TiO₂)ₘxH₂O in which M denotes Li, Na, K, Rb or Cs, n is between 0.5 and 2, m is between 1 and 10 and x is between 0 and 10, or alkaline earth metal titanate of the general formula (MO)ₙ(TiO₂)ₘxH₂O in which M denotes Mg, Ca, Sr or Ba, n is between 1 and 5, m is between 1 and 10 and x is between 0 and 10, said generators being **characterized in that** the electrolyte further contains at least one aluminium compound soluble in the electrolyte and at least partly consisting of double nitrides of titanium and aluminium, aluminium nitride or calcium aluminate, the amount of said aluminium coumpound being between 1 and 5% by weight with respect to the zinc oxide present in the active mass of the zinc anode.

2. Alkaline secondary electrochemical generators with zinc anode according to claim 1, **characterised in that** the alkaline solution is a solution of potassium hydroxide or sodium hydroxide.

3. Alkaline secondary electrochemical generators with zinc anode according to any one of claims 1 and 2, **characterised in that** the anode is an embedded-plasticised zinc electrode using a support and charge collector of the crosslinked metallic foam type.

4. Alkaline secondary electrochemical generators with zinc anode according to any one of claims 1 to 3, **characterised in that** the additive consists, at least in part, of calcium titanate.

5. Alkaline secondary electrochemical generators with zinc anode according to any one of claims 1 to 4, **characterised in that** the electrolyte contains solubilised zinc oxide.

6. Alkaline secondary electrochemical generators with zinc anode according to claim 4 or 5, **characterised in that** the amount of additive is between 0.5 and 20% by weight with respect to the zinc oxide.

7. Alkaline secondary electrochemical generators with zinc anode according to any one of claims 1 to 6, **characterised in that** the additive is in the form of fine particles dispersed in the active mass.

8. Alkaline secondary electrochemical generators with zinc anode according to any one of claims 1 to 6, **characterised in that** the additive is fixed on the particles of the said conducting ceramic material.

9. Alkaline secondary electrochemical generators with zinc anode according to any one of the preceding claims, **characterised in that** the active mass of the zinc anode contains bismuth or bismuth oxide.

## Patentansprüche

1. Alkalische, elektrochemisch aufladbare Generatoren mit einer Zinkanode, wobei die aktive Masse der Anode wenigstens eine leitende Keramik und Zinkoxyd aufweist, wobei das Elektrolyt des Generators aus einer alkalischen Lösung mit einer Basenkonzentration zwischen 7 und 15 Mol/l besteht und die aktive Masse der Zinkanode ein Additiv enthält, das aus wenigstens einem alkalisches Titanat der allgemeinen Formel (M₂O)ₙ(TiO₂)ₘxH₂O besteht, in der M Li, Na, K, Rb oder Cs bezeichnet, n zwischen 0,5 und 2 ist, m zwischen 1 und 10 ist und x zwischen 0 und 10 ist, oder das aus einem Erdalkalimetalltitanat der allgemeinen Formel (MO)ₙ(TiO₂)ₘxH₂O besteht, in der M Mg, Ca, Sr oder Ba bezeichnet, n zwischen 1 und 5 ist, m zwischen 1 und 10 ist und x zwischen 0 und 10 ist, wobei diese Generatoren **dadurch gekennzeichnet sind, dass** das Elektrolyt zudem wenigstens eine in dem Elektrolyt lösliche Aluminiumverbindung enthält und wenigstens teilweise aus doppelten Nitriden aus Titan und Aluminium, Aluminiumnitrid oder Calciumaluminat besteht, wobei die Menge der Aluminiumverbindung zwischen 1 und 5 Gewichtsprozent hinsichtlich des Zinkoxyds beträgt, das in der aktiven Masse der Zinkanode vorliegt.

2. Alkalische, elektrochemisch aufladbare Generatoren mit einer Anode nach Anspruch 1, **dadurch gekennzeichnet, dass** die alkalische Lösung eine Kalilauge- oder Natronlauge ist.

3. Alkalische, elektrochemisch aufladbare Generatoren mit einer Zinkanode nach einem der Ansprüche 1 bis 2, **dadurch gekennzeichnet, dass** die Anode eine bestrichen-plastifizierte Zinkelektrode unter Verwendung eines Trägers und Ladungssammlers in der Art eines vernetzten metallischen Schaums ist.

4. Alkalische, elektrochemisch aufladbare Generatoren mit einer Zinkanode nach einem der Ansprüche 1 bis 3, **dadurch gekennzeichnet, dass** das Additiv mindestens teilweise aus Calciumtitanat besteht.

5. Alkalische, elektrochemisch aufladbare Generatoren mit einer Zinkanode nach einem der Ansprüche 1 bis 4, **dadurch gekennzeichnet, dass** das Elektrolyt gelöstes Zinkoxid enthält.

6. Alkalische, elektrochemisch aufladbare Generatoren mit einer Zinkanode nach Anspruch 5 oder 6, **dadurch gekennzeichnet, dass** die Menge des Additivs zwischen 0,5 bis 20 Gewichtsprozent in Hinsicht auf das Zinkoxid beträgt.

7. Alkalische, elektrochemisch aufladbare Generatoren mit einer Zinkanode nach einem der Ansprüche 1 bis 6, **dadurch gekennzeichnet, dass** das Additiv in der Form von feinen Partikeln vorliegt, die in der aktiven Masse dispergiert sind.

8. Alkalische, elektrochemisch aufladbare Generatoren mit einer Zinkanode nach einem der Ansprüche 1 bis 7, **dadurch gekennzeichnet, dass** das Additiv auf den Partikeln der leitenden Keramik fixiert ist.

9. Alkalische, elektrochemisch aufladbare Generatoren mit einer Zinkanode nach einem der vorhergehenden Ansprüche, **dadurch gekennzeichnet, dass** die aktive Masse der Zinkanode Wismut oder Wismutoxyd enthält.
